# EUROPEAN PATENT SPECIFICATION

(11) **EP 1 110 701 B1**
(45) Date of publication and mention of the grant of the patent: **27.10.2004**
(21) Application number: 00500259.7
(22) Date of filing: 18.12.2000
(51) Int. Cl.: B29C 65/08, B65B 9/04, B65B 51/22

(54) **System for welding blister type containers and similar**
System zum Verschweissen blisterartiger Verpackungen und dergleichen
Système pour le soudage d'embalages du type blister et similaires

(30) Priority: 24.12.1999 ES 9902847
(43) Date of publication of application: 27.06.2001
(73) Proprietor: Miret Gayet, Xavier, Barcelona (ES)
(72) Inventor: Miret Gayet, Xavier, Barcelona (ES)
(74) Representative: Davila Baz, Angel

(56) References cited:
- FR-A- 2 628 030
- FR-A- 2 741 603
- US-A- 3 841 947
- US-A- 4 146 416
- US-A- 4 414 045
- US-A- 4 668 472
- US-A- 5 752 363
- PATENT ABSTRACTS OF JAPAN vol. 008, no. 180 (M-318), 18 August 1984 (1984-08-18) & JP 59 071818 A (SHIYOUICHI HORINIWA), 23 April 1984 (1984-04-23)
- PATENT ABSTRACTS OF JAPAN vol. 1995, no. 09, 31 October 1995 (1995-10-31) & JP 07 156907 A (SUMITOMO BAKELITE CO LTD), 20 June 1995 (1995-06-20)
- PATENT ABSTRACTS OF JAPAN vol. 015, no. 389 (M-1164), 2 October 1991 (1991-10-02) & JP 03 158227 A (SANKYO CO LTD), 8 July 1991 (1991-07-08)
- PATENT ABSTRACTS OF JAPAN vol. 012, no. 152 (M-695), 11 May 1988 (1988-05-11) & JP 62 273832 A (EIJI MORI;OTHERS: 01), 27 November 1987 (1987-11-27)
- PATENT ABSTRACTS OF JAPAN vol. 006, no. 120 (M-140), 3 July 1982 (1982-07-03) & JP 57 046865 A (NIPPON KOSHUHA:KK), 17 March 1982 (1982-03-17)

## Description

### OBJECT OF THE INVENTION

The present invention relates to a new system of welding within the sphere of blister type containers and similar, which permits the use of ultrasonic techniques in wide area welding, as for example where the required productivity requires in turn the simultaneous sealing of a considerable number of containers, in each work cycle.

Constituting the object of the invention, in addition to the sealing by ultrasonic means, is achieving a continuous production, a saving in raw materials and labour, and the employment of different types of material in the forming of the container, fundamentally ecological materials, and a cleaner join or weld, without releasing monomers into the product contained, which make said system specially apt in the pharmaceutical and foodstuff industrial sectors.

### BACKGROUND OF THE INVENTION

The manufacture and distribution of merchandise for consumption make it increasingly necessary to present the products in quality blister type containers, transparent, hermetic, attractive and ecological. Such merchandise must be produced and packed with maximum speed and autonomy in order to satisfy a market which is increasingly competitive and demanding.

For the sealing of these blister type containers, two systems are employed at the present time, one thermal and the other by high-frequency application.

The thermal system proves expensive through the need to apply a heat-sealing lacquer on one of the layers to be joined, and additionally gives a poor quality appearance or finish which is frequently made worse by the curling of the container as a result of the heat, to which must be added the need to use broad welding lips in order to ensure the join.

The high-frequency welding system overcomes the problems of the preceding system but, however, by its very nature, is limited to a low production, of around three to four hundred cycles per hour, and this being in two independent processes, since it is first necessary to shape plastic sheet by heat, thermoforming, and next in another machine, the thermoformed layer has to be assembled with the other layer part of the blister, that commonly termed the lid.

In a more specific manner, in high-frequency welding systems the join can be made between two piece parts of the same or similar nature, that is, based on piece parts of a same plastic or of two similar plastics, the welding being done by the effect of heat and pressure. The joined surfaces also termed welded joins must be brought to a thermoplastic state, that is, a state of fusion, in order that the weld can be implemented. Thereafter the surfaces are pressed together and the join is allowed to cool until it acquires a stable condition. A further drawback of employing the high frequency process lies in the possibility of sterility being produced in the personnel working the machine.

On the other hand, in ultrasonic welding, the material fuses through the effect of internal friction. To achieve this, advantage is taken of the damping capacity of plastics. More specifically, a high frequency mechanical oscillation is produced by means of a sonotrode, that is by means of an acoustic vibrator. This vibration is transmitted through the piece part to the anvil, where it is reflected and a standing wave is set up.

At the present time however, ultrasonic welding is not applied to the sealing of blister type containers when an extensive welding area or surface is required, the reason being that the equipment that has to be used rises exponentially in price with the increase in welded area. More specifically, the greater the power in the equipment, the greater the amplitude obtained in the vibrations, but at a very high cost and with poor uniformity, since the applied power is concentrated fundamentally in the centre point of the sonotrode, diminishing progressively towards the perimeter, where the result proves unacceptable.

JP-A-7-156907 discloses a system comprising a plurality of sonotrodes or similar, arranged for sealing, by welding, a plurality of juxtaposed containers, each container being sealed by one sonotrode.

US-A-3841947 discloses a method and apparatus for ultrasonic welding including the use of paper sheets interposed between, on the one hand, the parts to be welded, and, on the other hand, the sonotrodes and anvil, respectively.

### DESCRIPTION OF THE INVENTION

The invention relates to a system as defined in claim 1 and to a method as defined in claim 2.

The welding system proposed by the invention, based on the use of ultrasonic welding, overcomes the problems outlined above in a fully satisfactory manner.

To this end and in a more specific manner, said system is based on the use of a plurality of ultrasonic welding units (also called sonotrodes or acoustic vibrators), independent from each other and spaced at reduced distances from each other, forming a mosaic, so that it is only necessary to use the appropriate number of units in order to carry out, in a single operational machine, the closing or sealing of a plurality of containers that cover any surface area, as large as is required, by means of the pertinent lids. The system also provides for the inclusion between the battery of sonotrodes and lids, of a Teflon sheet or similar.

### DESCRIPTION OF THE DRAWINGS

In order to complete the description being made and to assist in a better understanding of the characteristics of the invention, in accordance with a preferred example of practical embodiment thereof, said description is accompanied by a set of drawings forming an integral part thereof, in which, by way of illustration and not restrictively, the following is shown:
Figure 1.- Shows, schematically, in a top view, a plurality of sonotrodes belonging to respective independent ultrasonic welding units, distributed according the welding system proposed by the invention.
Figure 2.- Shows a side elevation, partially in detail and in cross section, of the assembly represented in the preceding figure on the cutting line A-B of said figure.
Figure 3.- Is a view similar to that of figure 2, showing a variant in implementation.

### PREFERRED EMBODIMENT OF THE INVENTION

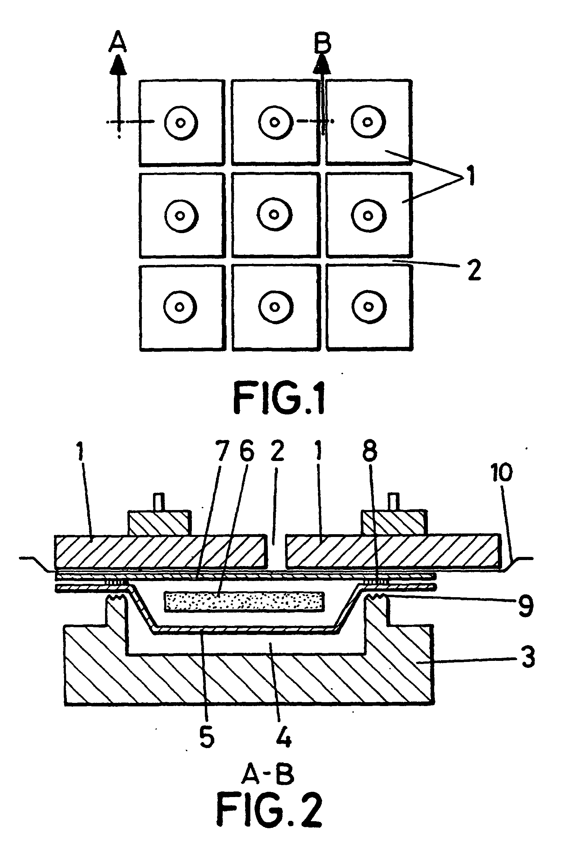

In the light of these figures and more specifically figure 1, it can be seen how the welding system put forward is based on the use of a battery of sonotrodes (1), functionally independent from each other, that is, belonging to respective ultrasonic welding units, distributed in a grid pattern, forming a mosaic, substantially close to each other, that is, defining very reduced separations (2).

This battery of sonotrodes (1) shall act on a welding mould (3), in which are defined recesses (4) for the body (5) of the respective container elements of the product (6) in question, body which is complemented with the traditional lid (7) that is attached to the body (5) by means of a perimeter strip for sealing (8), in absence of the traditional lacquer, the recesses (4) mentioned having at the level of their mouth, grooves (9) to facilitate the join or union between the body (5) and the lid (7).

Between the battery of sonotrodes (1) and the lid (7) is inserted a damping layer (10) which attenuates the destructive and splinter-provoking friction which can result from the direct contact between the sonotrode (1) and the welding mould (3).

This welding system offers a number of advantages which are centred essentially on the following features:
- It is possible to weld to the layer constituting the body (5), a lid (7), both obtained from a film which can be as thin as the container safety permits, which is not possible with the high frequency welding system, since it necessarily requires the use of layers of thickness greater than 60 microns, while it is more economical in the consumption of adhesives in comparison with the heat-sealing process.
- It permits continuous production, at a rhythm of up to 1200 cycles per hour, noticeably higher than that of 400 cycles per hour that can, at maximum, be reached with the high frequency welding systems, and also permit full automation of the process.
- It permits the welding of two or more synthetic fabrics or layers to each other, and specifically permits the welding of polystyrene layers to each other which, up to the present time, is not feasible with any conventional sealing system. This brings with it the substitution of the traditional PVC, with the subsequent repercussion from an ecological viewpoint. In a general way, it is possible to join to each other the majority of thermoplastic layers existing on the market, as well as foam-type materials and synthetic fabrics. It also permits the joining of materials of different kinds.
- Ultrasonic welding permits cleaners joins than those achieved with the thermoplastic heating techniques used at present, since there is no release of monomers into the product or contents, which makes this system specially suited and recommendable for the manufacture of blisters in the pharmaceutical and foodstuffs industries.

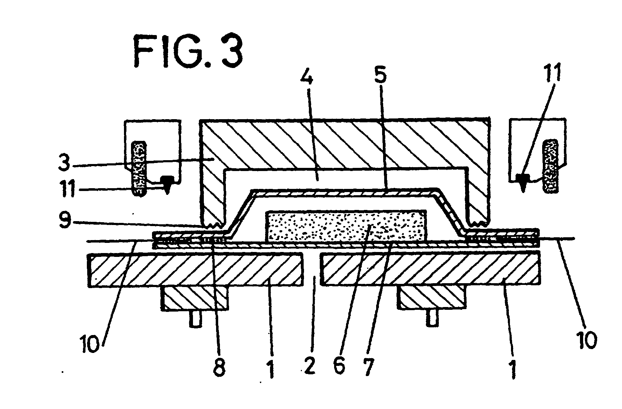

In the example shown in figure 3, use is made of the same reference numbers as in figure 2 for indicating the same elements or components.

In this case the battery of sonotrodes (1) and the welding mould (3) have their position reversed, with respect to that illustrated in figure 2. This arrangement is useful, for example, for the packaging of small articles, such as promotional items that are delivered along with the article being promoted, like for example magazines with which a ballpoint pen or the like is included. In these cases the system of the invention permits a considerable saving with regard to material, by using only the portion of the layer necessary to cover the article.

The join for this type of package is made with a thermoadhesive plastic film or layer (5) and a light cardboard sheet (7), that could be part of the article being promoted.

The promotional article (6) is placed on top of the light cardboard sheet (7) and, on top of this, is placed the thermoplastic layer (5) that covers the promotional article, adapting to the shape of the latter because of its elasticity. In this way it is not necessary to shape the layer (5) by heating beforehand and this operation is made simpler by inverting the system, so that the promotional article (6) and the thermoadhesive layer (5) are positioned by gravity.

For cutting the thermoadhesive layer, a template is provided which reproduces the outline of the mould and is fitted with an incandescent element or filament (11).

To prevent it from cutting or burning the light cardboard (7), a Teflon or similar sheet (10) is incorporated, mounted between the light cardboard sheet (7) and the thermoadhesive layer (5). Said Teflon sheet (10) is evacuated centrally, coinciding approximately with the external contour of the mould so that it does not interfere in the welding sector.

The procedure of the invention is specially applicable to the packing of articles for consumption, small in size, and it is possible to effect a retraction, of shrinking of the layer over one or various independent articles. It is also possible to perform partial shrinking of the layer by stretching the film over cardboard, and joining it to this.

The processes of shaping, welding and cutting are practically simultaneous and done in cold at a single work station and occupy an extremely short space of time, permitting a packaging speed to be achieved that is much higher than that reached with a traditional thermo-welding machine. Moreover, the welding mould acts at the same time as a stamping mould.

By working simultaneously with both articles separated from each other, situated on the same piece of cardboard or item to be promoted, a saving in manpower is achieved and, consequently, productivity is enhanced.

Furthermore, by avoiding thermoforming, a saving in power consumption is achieved.

## Claims

1. Welding system for blister type containers and similar, which is specially designed for welding large areas, specifically for the simultaneous sealing of a plurality of containers (5) by means of lids (7) in a single operational cycle, permitting the use of ultrasonics and having uniformity over the entire sealing area, the system comprising:
a battery of sonotrodes (1), pertaining to ultrasonic machines functionally independent from each other; and
a welding mould (3) in which are defined recesses (4);
**characterised in that**
said sonotrodes are distributed in a two-dimensional grid pattern, forming a mosaic in which said sonotrodes are kept independent from each other, separated from each other by small spaces (2) between adjacent sonotrodes;
and **in that**
each recess (4) of the welding mould (3) is facing a plurality of adjacent sonotrodes (1).

2. Method for welding lids (7) to bodies (5) of blister type containers, comprising the step of
welding the lids to the bodies using a battery of sonotrodes (1) pertaining to ultrasonic machines functionally independent from each other, **characterised in that** said sonotrodes are distributed in a two-dimensional grid pattern, forming a mosaic in which said sonotrodes are kept independent from each other, separated from each other by small spaces (2) between adjacent sonotrodes;
and **in that**
the sonotrodes are arranged in such a way that each body (5) is welded to the lid (7) by a plurality of adjacent sonotrodes (1).

3. Method according to claim 2, **characterised in that** a sheet of Teflon or similar (10) is placed between the battery of sonotrodes (1) and the lids (7).

## Patentansprüche

1. Schweißsystem für Behälter vom Blistertyp und dergleichen, das sich insbesondere zum Schweißen großer Flächen eignet, insbesondere zum gleichzeitigen Versiegeln einer Mehrzahl von Behältern (5) mittels Deckeln (7) in einem einzigen Arbeitstakt, das die Verwendung von Ultraschall gestattet und über den gesamten Versiegelungsbereich hinweg eine Gleichmäßigkeit aufweist, wobei das System folgendes umfasst:
eine Batterie aus Sonotroden (1) für Ultraschallmaschinen, die funktional voneinander unabhängig sind; und
ein Schweißgesenk (3), in dem Ausnehmungen (4) definiert sind;
**dadurch gekennzeichnet, dass**
die Sonotroden in einem zweidimensionalen Gittermuster verteilt sind und dabei ein Mosaik bilden, in dem die Sonotroden voneinander unabhängig gehalten werden und durch kleine Zwischenräume (2) zwischen benachbarten Sonotroden voneinander getrennt sind;
und **dadurch gekennzeichnet, dass**
jede Ausnehmung (4) des Schweißgesenks (3) einer Mehrzahl benachbarter Sonotroden (1) zugewandt ist.

2. Verfahren zum Schweißen von Deckeln (7) an Körper von Behältern vom Blistertyp, wobei das Verfahren folgende Schritte umfasst:
Schweißen der Deckel an die Körper unter Verwendung einer Batterie aus Sonotroden (1) für Ultraschallmaschinen, die funktional voneinander unabhängig sind, **dadurch gekennzeichnet, dass** die Sonotroden in einem zweidimensionalen Gittermuster verteilt sind und dabei ein Mosaik bilden, in dem die Sonotroden voneinander unabhängig gehalten werden und durch kleine Zwischenräume (2) zwischen benachbarten Sonotroden voneinander getrennt sind;
und **dadurch gekennzeichnet, dass**
die Sonotroden dergestalt angeordnet sind, dass jeder Körper (5) mittels einer Mehrzahl benachbarter Sonotroden (1) an den Deckel (7) angeschweißt wird.

3. Verfahren nach Anspruch 2, **dadurch gekennzeichnet, dass** zwischen der Batterie aus Sonotroden (1) und den Deckeln (7) eine Lage Teflon oder dergleichen (10) angeordnet wird.

## Revendications

1. Système de soudage pour des conteneurs de type sous cloque et similaires, qui est spécialement conçu pour souder de larges superficies, spécifiquement pour le scellement simultané d'une pluralité de conteneurs (5) au moyen de couvercles (7) dans un seul cycle d'exploitation, permettant l'utilisation d'ultrasons et ayant l'uniformité sur toute la zone de scellement, lequel système comprenant :
une batterie de sonotrodes (1), appartenant aux machines d'usinage par ultrasons fonctionnellement indépendantes les unes des autres ; et
un moule de soudage (3) dans lequel sont définis des évidements (4) ;
**caractérisé en ce que**
lesdites sonotrodes sont distribuées dans une configuration à grille bidimensionnelle, formant une mosaïque dans laquelle lesdites sonotrodes sont conservées indépendantes les unes des autres, séparées les unes des autres par de petits espaces (2) entre les sonotrodes adjacentes ;
et **en ce que**
chaque évidement (4) du moule de soudage (3) fait face à une pluralité de sonotrodes adjacentes (1).

2. Procédé de soudage de couvercles (7) sur les corps (5) de conteneurs de type sous cloque comprenant l'étape consistant à :
souder les couvercles sur les corps en utilisant une batterie de sonotrodes (1) appartenant aux machines d'usinage par ultrasons fonctionnellement indépendantes les unes des autres, **caractérisé en ce que** lesdites sonotrodes sont distribuées dans une configuration à grille bidimensionnelle, formant une mosaïque dans laquelle lesdites sonotrodes sont conservées indépendantes les unes des autres, séparées les unes des autres par de petits espaces (2) entre les sonotrodes adjacentes ;
et **en ce que**
les sonotrodes sont agencées de telle manière que chaque corps (5) est soudé au couvercle (7) par une pluralité de sonotrodes adjacentes (1).

3. Procédé selon la revendication 2, **caractérisé en ce qu'**une feuille de Téflon ou similaire (10) est placée entre la batterie de sonotrodes (1) et les couvercles (7).
